# EUROPÄISCHE PATENTSCHRIFT

(11) **EP 4 153 879 B1**
(45) Veröffentlichungstag und Bekanntmachung des Hinweises auf die Patenterteilung: **17.04.2024**
(21) Anmeldenummer: 21722378.3
(22) Anmeldetag: 20.04.2021
(51) Int. Cl.: F16D 13/71

(54) **KUPPLUNGSANORDNUNG**
CLUTCH ASSEMBLY
ENSEMBLE EMBRAYAGE

(30) Priorität: 20.05.2020 DE 102020113621
(43) Veröffentlichungstag der Anmeldung: 29.03.2023
(73) Patentinhaber: Schaeffler Technologies AG & Co. KG, 91074 Herzogenaurach (DE)
(72) Erfinder: REIMNITZ, Dirk, 77815 Bühl (DE)
(86) Internationale Anmeldenummer: PCT/DE2021/100359
(87) Internationale Veröffentlichungsnummer: WO 2021/233493

(56) Entgegenhaltungen:
- WO-A1-2009/093529
- FR-A- 1 294 170
- US-A- 3 450 241
- US-A- 4 641 736

## Beschreibung

Die vorliegende Erfindung betrifft eine Kupplungsanordnung, insbesondere zur Kupplung eines Elektromotors und/oder eines Verbrennungsmotors mit dem Antriebsstrang eines Kraftfahrzeugs, insbesondere mittels eines Hybridmoduls, umfassend eine Kupplung mit wenigstens einer Kupplungsscheibe, welche radial und axial zwischen einer Anpressplatte und einer der Anpressplatte axial gegenüberliegenden Gegenplatte angeordnet ist, so dass durch einen relativen axialen Versatz von Kupplungsscheibe und/oder Anpressplatte und/oder Gegenplatte ein Reibschluss zwischen diesen Bauteilen herstellbar und so ein Drehmoment zwischen der Kupplungsscheibe und der Anpressplatte sowie Gegenplatte übertragbar ist, wobei die Kupplung wenigstens eine Tellerfeder aufweist, welche gegenüber der Anpressplatte und der Gegenplatte verspannt ist, so dass ein federkraftbewirkter Versatz der Anpressplatte zur Gegenplatte bewirkbar ist, wobei die Kupplung ferner einen ringförmigen Kupplungsdeckel mit einem radial äußeren Kupplungsdeckeldurchmesser besitzt, und die Kupplungsscheibe insbesondere bevorzugt innerhalb des äußeren Kupplungsdeckeldurchmessers angeordnet ist.

Ein Antriebsstrang eines Hybridfahrzeuges umfasst üblicherweise eine Kombination aus einer Brennkraftmaschine und einem Elektromotor, und ermöglicht - beispielsweise in Ballungsgebieten - eine rein elektrische Betriebsweise bei gleichzeitiger ausreichender Reichweite und Verfügbarkeit gerade bei Überlandfahrten. Zudem besteht die Möglichkeit, in bestimmten Betriebssituationen gleichzeitig durch die Brennkraftmaschine und den Elektromotor anzutreiben. Der Elektromotor von Hybridfahrzeugen ersetzt dabei meist den früher üblichen Starter für die Brennkraftmaschine und die Lichtmaschine, um eine Gewichtszunahme des Hybridfahrzeuges gegenüber Fahrzeugen mit üblichen Antriebssträngen zu reduzieren.

Wie aus der EP 0 773 127 A1, DE 100 18 926 A1 und US 2007/05726 A1 bekannt ist, kann zwischen Brennkraftmaschine und Elektromotor eine erste Kupplungsanordnung angeordnet sein, um die Brennkraftmaschine von dem Elektromotor und dem restlichen Antriebsstrang des Hybridfahrzeuges abzutrennen. Bei rein elektrischer Fahrt wird dann die erste Kupplungsanordnung - auch als Trennkupplung bezeichnet - geöffnet und die Brennkraftmaschine abgeschaltet, so dass das Abtriebsmoment des Hybridfahrzeuges alleine von dem Elektromotor aufgebracht wird.

Derartige Trennkupplungen werden üblicherweise mittels eines hydraulischen Ausrücksystems betätigt. Ein hydraulisches Ausrücksystem verfügt in der Regel über einen Geberzylinder, der den am Geberzylinder erzeugten Druck über eine hydraulische Druckleitung an den Nehmerzylinder überträgt. Der Nehmerzylinder überträgt mittels eines axial verlagerbaren Kolbens und unter Zwischenschaltung eines Kupplungsausrücklagers den hydraulischen Druck auf ein Hebelsystem, mittels dessen ein Reibschluss an der Trennkupplung ausgebildet oder gelöst wird. Vollhydraulische Kupplungssysteme, wie sie in der Regel bei Hybridmodulen zum Einsatz kommen, können beispielsweise mit einem Zentralausrücker ausgestattet sein, welcher häufig auch als Concentric Slave Cylinder (CSC) bezeichnet wird. Diese auf einen Zentralausrücker basierenden Kupplungsausrücksysteme benötigen innerhalb eines Hybridmoduls einen vergleichsweise großen Bauraum.

Auch die zur Hybridisierung konventioneller Antriebsstränge benötigten Trennkupplungen müssen verglichen mit konventionellen Kupplungssystemen besondere Anforderungen hinsichtlich Baugröße und Energieeffizienz erfüllen. Insbesondere Trennkupplungen für P2-Hybridmodule müssen im offenen Zustand besonders schleppmomentarm sein. Wenn das Fahrzeug vom E-Motor angetrieben wird und der Verbrennungsmotor abgeschaltet ist, treten in der geöffneten Trennkupplung häufig für längere Zeit hohen Differenzdrehzahlen zwischen der Antriebseite und der Abtriebseite der Kupplung auf. Selbst kleine in der Kupplung auftretende Schleppmomente können dabei wegen der großen Differenzdrehzahlen schnell zu unzulässig großen Energieeinträgen führen. Sind die Energieeinträge in die geöffnete Kupplung zu hoch, kann dies zu erhöhtem Verschleiß der Reibbeläge und somit zum frühzeitigen Ausfall der Kupplung führen. Hohe Energieeinträge in die geöffnete Kupplung können auch die Reichweite, die das Fahrzeug mit einer Batterieladung ohne Verbrennungsmotorunterstützung zurücklegen kann, negativ beeinflussen.

Aus der US 4 641 736 A ist eine Kupplungsanordnung bekannt, die auf den Oberbegriff des Anspruchs 1 lesbar ist.

Die Aufgabe der Erfindung besteht somit darin, eine Kupplungsanordnung bereitzustellen, welche eine möglichst kompakte Bauform aufweist.

Diese Aufgabe wird gelöst durch eine Kupplungsanordnung gemäß Anspruch 1, insbesondere zur Kupplung eines Elektromotors und/oder eines Verbrennungsmotors mit dem Antriebsstrang eines Kraftfahrzeugs, insbesondere mittels eines Hybridmoduls, umfassend eine Kupplung mit wenigstens einer Kupplungsscheibe, welche radial und axial zwischen einer Anpressplatte und einer der Anpressplatte axial gegenüberliegenden Gegenplatte angeordnet ist, so dass durch einen relativen axialen Versatz von Kupplungsscheibe und/oder Anpressplatte und/oder Gegenplatte ein Reibschluss zwischen diesen Bauteilen herstellbar und so ein Drehmoment zwischen der Kupplungsscheibe und der Anpressplatte sowie Gegenplatte übertragbar ist, wobei die Kupplung wenigstens eine Tellerfeder aufweist, welche gegenüber der Anpressplatte und der Gegenplatte verspannt ist, so dass ein federkraftbewirkter Versatz der Anpressplatte zur Gegenplatte bewirkbar ist, wobei die Kupplung ferner einen ringförmigen Kupplungsdeckel mit einem radial äußeren Kupplungsdeckeldurchmesser besitzt, und die Kupplungsscheibe insbesondere bevorzugt innerhalb des äußeren Kupplungsdeckeldurchmessers angeordnet ist, wobei die ringförmige Tellerfeder an einer äußeren der Kupplungsscheibe abgewandten Stirnseite des Kupplungsdeckels und axial zu diesem beabstandet angeordnet ist, und die ringförmige Tellerfeder einen radial äußeren Federringdurchmesser und einen radial inneren Federringdurchmesser aufweist, wobei der radial äußere Federringdurchmesser kleiner ist als der radial äußere Durchmesser der Kupplungsscheibe und der radial innere Federringdurchmesser der Tellerfeder kleiner ist als der radial innere Durchmesser der Kupplungsscheibe .

Die erfindungsgemäße Kupplungsanordnung weist eine kompakte, an die übliche Form des Bauraums zwischen einem Verbrennungsmotor und einem Elektromotor angepasste Bauweise auf. Die Kupplungsanordnung ist in bevorzugter Kombination mit ihrem hydraulischen Betätigungssystem besonders geeignet, um vorhandene konventionelle Antriebsstränge, die einen Drehmomentwandler, eine nasse Kupplung oder eine nasse Doppelkupplung aufweisen, zu hybridisieren. Hierauf wird nachfolgend - insbesondere bei der Beschreibung der Ausführungsbeispiele - noch näher eingegangen. Alternativ zu der bevorzugten und nachfolgend detailliert erläuterten hydraulischen Aktuierung der Kupplungsanordnungen sind grundsätzlich auch mechanische, elektromechanische, elektrische, und/oder elektromagnetische Aktuierungsverfahren denkbar.

Zunächst werden die einzelnen Elemente des beanspruchten Erfindungsgegenstandes in der Reihenfolge ihrer Nennung im Anspruchssatz erläutert und nachfolgend besonders bevorzugte Ausgestaltungen des Erfindungsgegenstandes beschrieben.

Als Kraftfahrzeuge im Sinne dieser Anmeldung gelten Landfahrzeuge, die durch Maschinenkraft bewegt werden, ohne an Bahngleise gebunden zu sein. Ein Kraftfahrzeug kann beispielsweise ausgewählt sein aus der Gruppe der Personenkraftwagen (PKW), Lastkraftwagen (LKW), Kleinkrafträder, Leichtkraftfahrzeuge, Krafträder, Kraftomnibusse (KOM) oder Zugmaschinen.

Ein Hybridelektrokraftfahrzeug, auch als Hybrid Electric Vehicle (HEV) bezeichnet, ist ein Elektrofahrzeug, das von mindestens einem Elektromotor sowie einem weiteren Energiewandler angetrieben wird und Energie sowohl aus seinem elektrischen Speicher (Akku) als auch einem zusätzlich mitgeführten Kraftstoff bezieht.

Im Sinne dieser Anmeldung werden unter dem Antriebsstrang eines Kraftfahrzeuges alle Komponenten verstanden, die im Kraftfahrzeug die Leistung für den Antrieb des Kraftfahrzeugs generieren und über die Fahrzeugräder bis auf die Straße übertragen.

In einem Hybridmodul können Bau- und Funktionselemente eines hybridisierten Antriebsstrangs räumlich und/oder baulich zusammengefasst und vorkonfiguriert sein, so dass ein Hybridmodul in einer besonders einfachen Weise in einen Antriebsstrang eines Kraftfahrzeugs integrierbar ist. Insbesondere können ein Elektromotor und ein Kupplungssystem, insbesondere mit einer Trennkupplung zum Einkuppeln des Elektromotors in und/oder Auskuppeln des Elektromotors aus dem Antriebsstrang, in einem Hybridmodul vorhanden sein.

Ein Hybridmodul kann je nach Eingriffspunkt des Elektromotors in den Antriebsstrang in die folgenden Kategorien P0-P4 eingeteilt werden:
P0: der Elektromotor ist vor der Brennkraftmaschine angeordnet und beispielsweise über einen Riemen mit der Brennkraftmaschine gekoppelt. Bei dieser Anordnung des Elektromotors wird dieser auch gelegentlich als Riemenstartergenerator (RSG) bezeichnet,
P1: der Elektromotor ist direkt hinter der Brennkraftmaschine angeordnet. Die Anordnung des Elektromotors kann beispielsweise kurbelwellenfest vor der Anfahrkupplung erfolgen,
P2: der Elektromotor ist zwischen einer häufig als K0 bezeichneten Trennkupplung und der Anfahrkupplung aber vor dem Fahrzeuggetriebe im Antriebsstrang angeordnet,
P3: der Elektromotor ist im Fahrzeuggetriebe und/oder der Getriebeausgangswelle angeordnet,
P4: der Elektromotor ist an einer bestehenden oder separaten Fahrzeugachse angeordnet und
P5: der Elektromotor ist am oder im Fahrzeugrad angeordnet, beispielsweise als Radnabenmotor.

Bevorzugt ist die erfindungsgemäße Kupplungsanordnung als Trennkupplung in einem Hybridmodul, insbesondere bevorzugt in einem P2-Hybridmodul, das innerhalb des Antriebsstrangs eines Kraftfahrzeugs zwischen der Brennkraftmaschine und dem Fahrzeuggetriebe angeordnet ist, integriert. Es kann alternativ auch bevorzugt sein, die erfindungsgemäße Kupplungsanordnung in einem P1-Hybridmodul anzuordnen. Beim rein elektrischen Fahren, wird dann beispielsweise die Brennkraftmaschine durch die erfindungsgemäße Kupplungsanordnung ausgekuppelt.

Das Fahrzeuggetriebe ist das Getriebe im Antriebsstrang eines Kraftfahrzeuges, das die Motordrehzahl auf die Antriebsdrehzahl übersetzt.

Eine Brennkraftmaschine, auch häufig als Verbrennungsmotor bezeichnet, wandelt chemische Energie in mechanische Arbeit um. Dazu wird im Brennraum der Brennkraftmaschine ein zündfähiges Gemisch aus Kraftstoff und Luft verbrannt. Kennzeichen der Brennkraftmaschinen ist die "innere Verbrennung", also die Erzeugung der Verbrennungswärme in der Verbrennungskraftmaschine. Die Wärmeausdehnung des so entstehenden Heißgases wird genutzt, um Kolben (beim Wankelmotor Läufer) zu bewegen.

Ein Elektromotor ist eine elektrische Maschine, die elektrische Leistung in mechanische Leistung umwandelt. In der Regel erzeugen stromdurchflossene Leiterspulen in Elektromotoren Magnetfelder, deren gegenseitige Anziehungs- und Abstoßungskräfte in Bewegung umgesetzt werden. Ein Elektromotor kann grundsätzlich auch generatorisch betrieben werden, so dass mechanische Leistung in elektrische Leistung umgewandelt wird.

Eine Kupplungsanordnung im Sinne dieser Erfindung umfasst wenigstens eine Kupplung. Eine Kupplungsanordnung kann weitere Bauteile aufweisen, wie beispielsweise ein Betätigungssystem - das auch als Ausrücksystem bezeichnet sein kann - oder mechanische Anbindungselemente zur Integration und Kopplung der Kupplung beispielsweise innerhalb eines Hybridmoduls.

Die Kupplung - auch als Trennkupplung bezeichnet - weist bevorzugt eine Kupplungsscheibe, eine Anpressplatte und eine Gegenplatte auf.

Eine Kupplung besitzt die Funktion, die einen Drehmomentfluß innerhalb eines Antriebsstranges eines Kraftfahrzeuges an einer definierten Position schaltbar zu unterbrechen oder zu schließen. Beispielsweise kann mittels einer Kupplung eine antreibende Motorseite in einem Antriebsstrang eines Kraftfahrzeuges schaltbar von der Getriebeseite gekuppelt bzw. entkuppelt werden und so beispielsweise einen Gangwechsel des Getriebes während der Fahrt zu ermöglichen und den antreibenden Motor hierdurch in einem bevorzugten Drehzahl-/ Drehmomentbereich betreiben zu können. Kupplungen können insbesondere auch dazu verwendet werden, innerhalb eines hybridisierten Antriebsstranges, einen Elektromotor und/oder Verbrennungsmotor in den Antriebsstrang ein- oder auszukuppeln. Derartige Kupplungen werden häufig auch als Trennkupplung bezeichnet.

Die Kupplungsscheibe ist das zentrale Verbindungselement des Kupplungssystems. Sie bildet mit der Anpressplatte und der Gegenplatte der Kupplung ein schaltbares Reibsystem. In eingekuppeltem Zustand ist Kupplungsscheibe zwischen Anpressplatte und Gegenplatte kraftschlüssig eingepresst. Die Kupplungsscheibe kann Reibbeläge aufweisen, über die der Reibschluss herstellbar ist.

Die Anpressplatte hat innerhalb der Kupplung die Funktion, die Kupplungsscheibe gegen die Gegenplatte zu pressen und so einen schaltbaren Reibschluss zwischen der Anpressplatte, der Kupplungsscheibe und der Gegenplatte zu bewirken. Die Anpressplatte ist insbesondere mit einem Betätigungssystem wirkverbunden, mittels dessen die Anpressplatte gegen die Kupplungsscheibe oder von dieser, insbesondere axial translatorisch weg bewegt werden kann. Die Anpressplatte kann Reibbeläge aufweisen, über die der Reibschluss herstellbar ist.

Die Gegenplatte stellt ein Gegenlager für die Anpressplatte und die Kupplungsscheibe bereit. Die Gegenplatte ist insbesondere axial fixiert. Es ist jedoch auch möglich, dass die Gegenplatte beim Einkuppeln in axialer Richtung gegen die Anpressplatte bewegt wird. Hierzu kann die Gegenplatte auch mit dem Betätigungssystem wirkverbunden sein. Die Gegenplatte kann Reibbeläge aufweisen, über die der Reibschluss herstellbar ist.

Ein hydraulisches Betätigungssystem - auch als Ausrücksystem bezeichnet - verfügt in der Regel über einen Geberzylinder, der den am Geberzylinder erzeugten Druck über eine hydraulische Druckleitung an den Nehmerzylinder überträgt.

Gelegentlich wird der hydraulische Druck auch mittels eines sogg. Powerpacks bereitgestellt, welches aus einer Hydraulikpumpe und einem von der Hydraulikpumpe beaufschlagbaren hydraulischen Druckspeicher besteht. Hierbei kann dann eine Druckkammer des Nehmerzylinders beispielsweise auch von einem Geberzylinder, der mittels eines Elektromotors von einem Steuergerät gesteuert wird, oder von einer Hydraulikpumpe, gegebenenfalls unter Mitwirkung eines Druckspeichers, hydraulisch druckbeaufschlagt sein. In vorteilhafter Weise kann ein sogenanntes Powerpack eingesetzt werden, das über eine insbesondere zentrale Hydraulikpumpe und entsprechenden Ventilen mehrere Druckkreisläufe schaltet.

Der Nehmerzylinder überträgt mittels eines axial verlagerbaren Kolbens den hydraulischen Druck auf ein Hebelsystem, welches mit der Kupplung wirkverbunden ist, so dass ein axialer Versatz des Kolbens eine Betätigung der Kupplung bewirkt.

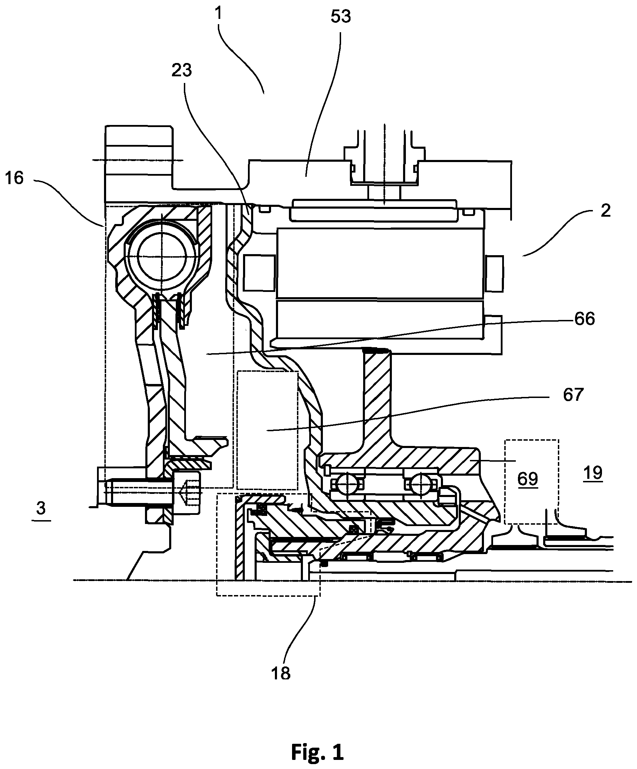

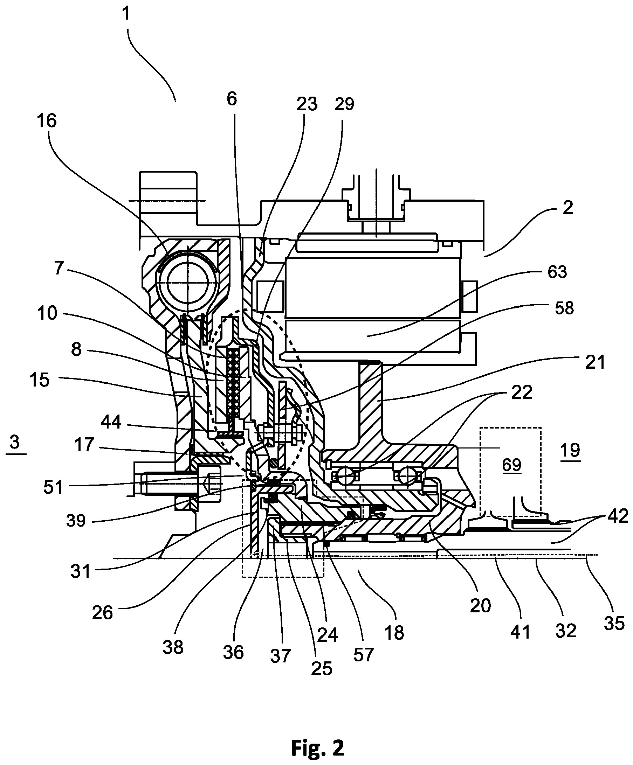

Gemäß einer vorteilhaften Ausgestaltung der Erfindung kann vorgesehen sein, dass die Tellerfeder eine Mehrzahl von Fenstern aufweist, durch die Anbindungselemente hindurchgreifen, die sich in Axialrichtung aus dem und/oder durch den Kupplungsdeckel erstrecken. So kann beispielsweise die Tellerfeder auf den Anbindungselementen gelagert sein. Bei Hebeln oder Zungen, wie sie bei Tellerfedern für Kupplungen häufig vorhanden sind, entsteht eine deutlich ungleiche Spannungsverteilung am Innen- und Außendurchmesser des ringförmigen Tellerfederabschnitts. In dem die für Tellerfeder ideale Ringform nur durch die Fenster in der Mitte des Rings unterbrochen wird, entstehen deutlich weniger Spannungserhöhungen an dem hochbelasteten Innen- und Außendurchmesser der Tellerfeder. Dies ermöglicht es hohe Kräfte bei den notwendigen Schwenkweg der Feder zu realisieren ohne Dauerfestigkeitsprobleme zu bekommen. Würde man auf die Fenster in der Tellerfeder verzichten, wäre die Spannungsverteilung in der Tellerfeder natürlich noch gleichmäßiger. Da der radiale Platz für die Feder aber durch den Bauraum begrenzt ist, müsste man, wenn man auf die Fenster verzichtet, mit Kupplungsbauteilen um die Tellerfeder radial innen oder radial außen herumgreifen. Diese Bauteile würden dann jedoch den radialen Platz für die Tellerfeder einschränken. Bei den für Trennkupplungen üblichen Bauräumen und Tellerfederkräften haben die Fenster in der Mitte der Tellerfeder einen geringeren negativen Einfluss auf die Spannungen der Tellerfeder als eine Verkleinerung der Ringbreite. Daher ist die in den Figuren 1 und 2 gezeigte Ausführungsform besonders gut für aufgedrückte Trennkupplungen geeignet, worauf nachfolgend noch näher eingegangen wird.

Es kann gemäß einer weiteren bevorzugten Weiterentwicklung der Erfindung auch vorgesehen sein, dass die Anbindungselemente Stufenbolzen umfassen. Es kann hierdurch erreicht werden, dass eine besonders montagefreundliche Ausbildung der Anbindungselemente bereitgestellt werden kann, da die Stufen des Stufenbolzens definierte Anschläge bzw. Anlageflächen zur Positionierung des Stufenbolzens oder an ihm befestigter Bauteile in axialer Richtung bereitstellen.

Des Weiteren kann es gemäß einer ebenfalls vorteilhaften Ausgestaltung der Erfindung vorgesehen sein, dass die Tellerfeder an ihrem inneren Federringdurchmesser axial fixiert ist und an ihrem äußeren Federringdurchmesser axial versetzbar ausgeführt ist, wodurch sich eine besonders vorteilhafte Federwirkung realisieren lässt. Es kann auch vorgesehen sein, dass die Tellerfeder an ihrem inneren Federringdurchmesser axial versetzbar ausgeführt ist und an ihrem äußeren Federringdurchmesser axial fixiert ist ausgeführt ist.

Erfindungsgemäß ist vorgesehen, dass sich die Tellerfeder im Bereich ihres äußeren Federringdurchmessers gegen einen an den Anbindungselementen axial fixierten Druckring abstützt, wodurch sich die Federwirkung der Tellerfeder für den gegebenen Anwendungsfall weiter optimieren lässt. Selbstverständlich ist es auch möglich, dass sich die Tellerfeder beispielsweise im Bereich ihres inneren Federringdurchmessers gegen den Druckring abstützt. Besonders bevorzugt ist es, dass sich die Tellerfeder im Bereich ihres axial versetzbaren, freien distalen Endes gegen den Druckring abstützt.

Des Weiteren kann die Erfindung auch dahingehend weiterentwickelt sein, dass die Kupplung mit einem Betätigungssystem wirkverbunden ist, mittels dessen die Kupplung in einen eingekuppelten und/oder ausgekuppelten Betriebszustand überführbar ist und das insbesondere hydraulische Betätigungssystem einen koaxial zur Kupplungsrotationsachse in Axialrichtung versetzbaren Kolben mit einer kreisförmigen Stirnfläche aufweist, welcher mechanisch so mit der Kupplung verbunden ist, dass ein axialer Versatz des Kolbens eine Aktuierung der Kupplung entgegen der Federkraft der Tellerfeder bewirkt und die Kupplung auf dem mitdrehend ausgeführten Betätigungssystem abgestützt ist. Der Vorteil, der sich hierdurch realisieren lässt, ist, dass mitdrehende Betätigungssysteme beispielsweise aus konventionellen Antriebssträngen bereits bekannt sind, so dass eine Hybridisierung derartiger vorhandener konventioneller Antriebskonzepte durch die erfindungsgemäße Kupplungsanordnung vereinfacht werden, da ein bereits vorhandenes Betätigungssystem um Wesentlichen unverändert übernommen werden kann.

In einer ebenfalls bevorzugten Ausgestaltungsvariante der Erfindung kann auch vorgesehen sein, dass der Kolben mit den Anbindungselementen so wirkverbunden ist, dass ein axialer Versatz des Kolbens einen axialen Versatz der Anpressplatte entgegen der Federkraft der Tellerfeder bewirkt.

Auch kann es vorteilhaft sein, die Erfindung dahingehend weiterzuentwickeln, dass die Kupplungsanordnung einen Elektromotor mit einem Rotor umfasst, wobei in Radialrichtung zwischen der Kupplungsrotationsachse und dem Rotor ein Ringraum definiert ist, in welchem die Tellerfeder aufgenommen ist. Besonders bevorzugt ist es in diesem Zusammenhang, dass die Kupplungsanordnung einen Elektromotor mit einem Rotor umfasst, wobei der Rotor drehfest mit einem Rotorträger verbunden ist, durch den Drehmoment zwischen dem Rotor und einer drehfest mit dem Rotorträger verbundenen Zwischenwelle des Betätigungssystems übertragbar ist, wobei der Rotor und die Zwischenwelle so konfiguriert sind, dass in Radialrichtung zwischen der Zwischenwelle und dem Rotor ein Ringraum definiert ist, in welchem die Tellerfeder aufgenommen ist, wodurch eine besonders kompakte Ausgestaltung der Kupplungsanordnung realisierbar ist.

Gemäß einer weiteren zu bevorzugenden Ausgestaltung des Erfindungsgegenstandes kann vorgesehen sein, dass die Kupplungsscheibe axial versetzbar an einer Sekundärseite eines Drehschwingungsdämpfers abgestützt ist, wodurch die kompakte Bauweise der Kupplungsanordnung weiter optimiert werden kann.

In einer weiteren, ebenfalls bevorzugten Ausgestaltung der Erfindung kann vorgesehen sein, dass in Radialrichtung zwischen dem äußeren Federringdurchmesser der Tellerfeder und dem Rotor des Elektromotors ein ringförmiger Luftspalt definiert ist, welcher nicht von Bauteilen der Kupplung durchgriffen wird. Auch hierdurch kann der kompakte Aufbau der Kupplungsanordnung weiter optimiert werden und gleichzeitig eine hinreichend gute Federwirkung der Tellerfeder bereitgestellt werden, da eine in radialer Erstreckung optimierte Länge der Tellerfeder realisiert werden kann.

Es kann des Weiteren insbesondere auch bevorzugt sein, dass die Tellerfeder einen runden Innen- und Außendurchmesser aufweist.

Nachfolgend wird die Erfindung anhand von Figuren ohne Beschränkung des allgemeinen Erfindungsgedankens näher erläutert werden.

Es zeigen:
- Figur 1: die Bauraumsituation einer Kupplungsanordnung in einer schematischen Querschnittsansicht,
- Figur 2: eine erste Ausführungsform einer erfindungsgemäßen Kupplungsanordnung in einer schematischen Querschnittsansicht,
- Figur 3: eine Detailansicht der Kupplung in einer schematischen Querschnittsansicht,
- Figur 4: eine erste Ausführungsform einer erfindungsgemäßen Kupplungsanordnung in einer eingekuppelten Betriebssituation in einer schematischen Querschnittsansicht
- Figur 5: eine Detailansicht der Tellerfeder und ihrer umgebenen Bauteile in einer perspektivischen Teilschnittansicht,
- Figur 6: eine erste Ausführungsform einer erfindungsgemäßen Kupplungsanordnung in einer schematischen Querschnittsansicht,
- Figur 7: ein Kraftfahrzeug mit einer erfindungsgemäßen Kupplungsanordnung in einer schematischen Querschnittsansicht, und
- Figur 8: eine perspektivische Detail-Teilschnittansicht einer Bajonettverbindung aus Figur 2.

Figur 1 zeigt eine Kupplungsanordnung 1, bei der zur Verdeutlichung der Bauraumsituation die Kupplung 6 entfernt wurde. Der rotationsymmetrische Bauraum, der zwischen dem Verbrennungsmotor 3 und dem Elektromotor 2 zu Verfügung steht, weist einen ersten ringförmigen Bauraumabschnitt 66 auf, der sich radial bis an die innere Mantelfläche des Hybridmodulgehäuses 53 nach außen erstreckt und an den sich axial in Richtung des Getriebes 19 versetzt ein zweiter Bauraumabschnitt 67 anschließt, der sich radial unterhalb des Rotors 63 des Elektromotors 2 befindet und somit radial stark eingeschränkt ist. Die Grenzen des ersten Bauraumabschnitts 66 und der zweiten Bauraumabschnitts 67 sind in der Darstellung der Figur 1 gestrichelt dargestellt.

Der erste radial große Bauraumabschnitt 66 wird zum überwiegenden Teil von einem Schwungrad oder - wie in dem gezeigten Ausführungsbeispiel - einem Drehschwingungsdämpfer 16 ausgefüllt. Um die nötige Massenträgheit zu erzielen und/oder die nötige Schwingungsisolation zu erzielen, müssen das Schwungrad oder der Drehschwingungsdämpfer 16 meist radial groß bauen. Für die Kupplung 6 und deren Betätigungssystem 18 steht daher nur ein axial sehr schmaler Bereich mit hinreichend großem Durchmesser vom ersten Bauraumabschnitt zur Verfügung, was gut in der Figur 1 erkennbar ist.

Um die Drehmomentübertragung sicherzustellen und die Reibflächenanzahl nicht zu sehr erhöhen zu müssen, sind die Reibflächen der Kupplung 6 in diesem ersten Bauraumabschnitt 66 angeordnet. Der Teil des ersten Bauraumabschnitts 66, der für die Kupplung 6 zur Verfügung steht, ist daher vorgesehen, die Anpressplatten 8, Gegenplatten 10 und Kupplungsscheiben 7 (bzw. die Kupplungslamellen, je nach Kupplungsbauweise) aufzunehmen. Alle anderen Kupplungsbauteile sind in dem radial kleinen zweiten Bauraumabschnitt 67 angeordnet, was gut beispielsweise aus der Zusammenschau von Figur 1 mit Figur 2 erkennbar ist und was nachfolgend näher erläutert wird.

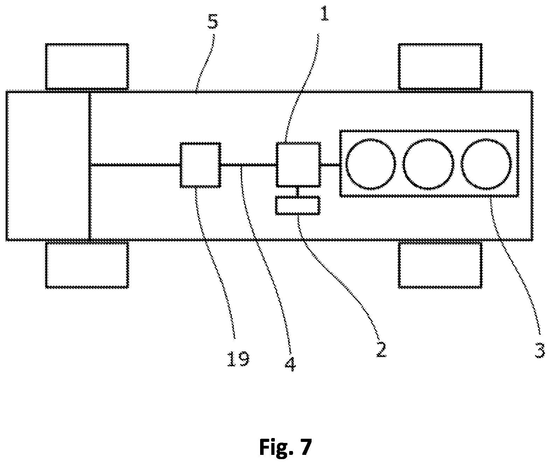

Die Figur 2 zeigt eine Kupplungsanordnung 1, insbesondere zur Kupplung eines Elektromotors 2 und/oder eines Verbrennungsmotors 3 mit dem Antriebsstrang 4 eines Kraftfahrzeugs 5, insbesondere mittels eines Hybridmoduls, wie es schematisch in der Figur 7 gezeigt ist.

Die Kupplungsanordnung 1 umfasst eine Kupplung 6 mit einer Kupplungsscheibe 7, welche radial und axial zwischen einer Anpressplatte 8 und einer der Anpressplatte 8 axial gegenüberliegenden Gegenplatte 10 angeordnet ist, so dass durch einen relativen axialen Versatz von Kupplungsscheibe 7 und Anpressplatte 8 in Richtung der Gegenplatte 10 ein Reibschluss zwischen diesen Bauteilen herstellbar und so ein Drehmoment zwischen der Kupplungsscheibe 7 und der Anpressplatte 8 sowie Gegenplatte 10 übertragbar ist.

Die Kupplung 6 weist wenigstens eine Tellerfeder 58 auf, welche gegenüber der Anpressplatte 8 und der Gegenplatte 10 verspannt ist, so dass ein federkraftbewirkter Versatz der Anpressplatte 8 zur Gegenplatte 10 bewirkbar ist. Die Kupplung 6 besitzt ferner einen ringförmigen Kupplungsdeckel 29 mit einem radial äußeren Kupplungsdeckeldurchmesser, wobei die Kupplungsscheibe 7 innerhalb des äußeren Kupplungsdeckeldurchmessers angeordnet ist.

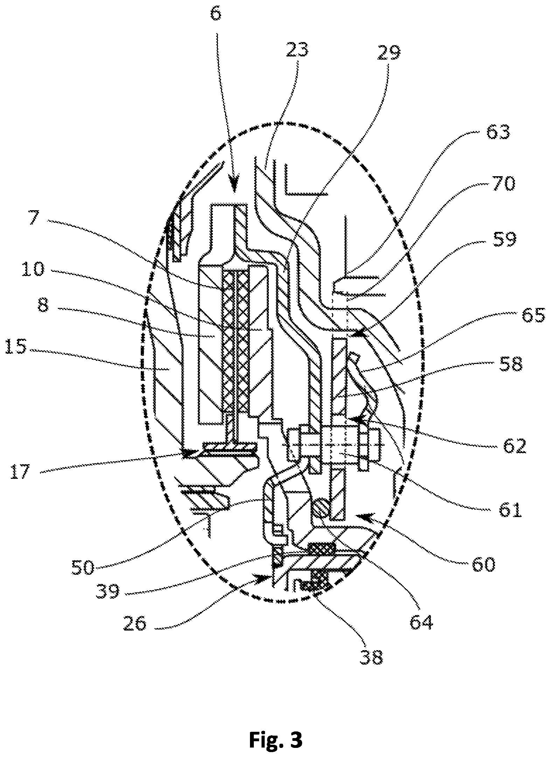

Die ringförmige Tellerfeder 58 ist an einer äußeren, der Kupplungsscheibe 7 abgewandten Stirnseite des Kupplungsdeckels 29 und axial zu diesem beabstandet angeordnet. Die Tellerfeder 58 besitzt einen radial äußeren Federringdurchmesser 59 und einen radial inneren Federringdurchmesser 60, was gut anhand der Detaildarstellung der Figur 3 erkennbar ist.

Der radial äußere Federringdurchmesser 59 ist kleiner als der radial äußere Durchmesser der Kupplungsscheibe 7 und der radial innere Federringdurchmesser 60 der Tellerfeder 58 kleiner ist als der radial innere Durchmesser der Kupplungsscheibe 7, so dass die Tellerfeder 58 in den zweiten Bauraumabschnitt 67, wie er in der Figur 1 gezeigt ist, einpassbar ist. Auch ist in der Figur 2 gezeigt, dass die Kupplungsanordnung 1 einen Elektromotor 2 mit einem Rotor 63 umfasst, wobei der Rotor 63 drehfest mit einem Rotorträger 21 verbunden ist, durch den Drehmoment zwischen dem Rotor 63 und einer drehfest mit dem Rotorträger 21 verbundenen Zwischenwelle 20 des Betätigungssystems 18 übertragbar ist. Der Rotor 63 und die Zwischenwelle 20 sind so konfiguriert, dass in Radialrichtung zwischen der Zwischenwelle 20 und dem Rotor 63 ein Ringraum, nämlich den aus Figur 1 bekannten Bauraumabschnitt 67, definiert ist, in welchem die Tellerfeder 58 aufgenommen ist.

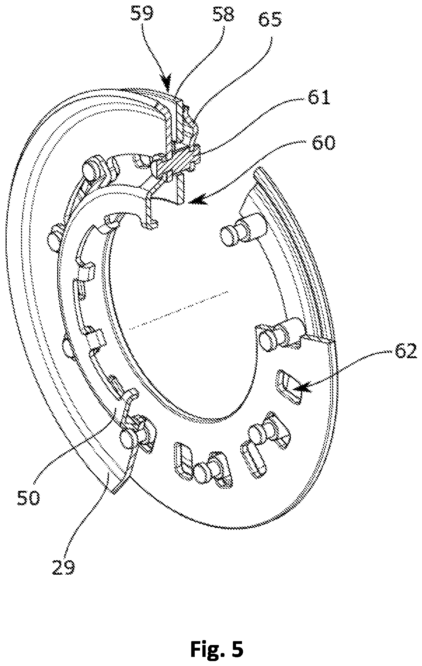

Aus der Figur 2 und Figur 5 ist ersichtlich, dass die Tellerfeder 58 eine Mehrzahl von über den Umfang verteilten Fenstern 62 aufweist, durch die Anbindungselemente 61 hindurchgreifen, die sich in Axialrichtung aus dem und/oder durch den Kupplungsdeckel 29 erstrecken. Die Anbindungselemente 61 dienen somit insbesondere der axialen Kraftübertragung. Grundsätzlich wäre es auch denkbar, dass die Tellerfeder 58 auf den Anbindungselementen 61 gelagert ist

In den gezeigten Ausführungsbeispielen sind die Anbindungselemente 61 als Stufenbolzen ausgeführt.

Wie in der Figur 3 dargestellt, ist die Tellerfeder 58 an ihrem inneren Federringdurchmesser 60 axial fixiert ist und an ihrem äußeren Federringdurchmesser 59 axial versetzbar ausgeführt. Die Tellerfeder 58 stützt sich im Bereich ihres äußeren Federringdurchmessers 59 gegen einen an den Anbindungselementen 61 axial fixierten Druckring 65 ab. In Radialrichtung zwischen dem äußeren Federringdurchmesser 59 der Tellerfeder 58 und dem Rotor 63 des Elektromotors 2 ist ein ringförmiger Luftspalt 70 definiert, welcher nicht von Bauteilen der Kupplung 6 durchgriffen wird. In dem gezeigten Ausführungsbeispiel wird der Luftspalt 70 lediglich von der ortsfesten Zwischenwand 23 Hybridmodulgehäuses 53 durchgriffen, nicht jedoch von Bauteilen der Kupplung 6. Hierdurch kann die radiale Erstreckung der Tellerfeder 58 bestmöglich ausgenutzt werden.

In der Figur 2 ist ferner gezeigt, dass die Kupplung 6 mit einem Betätigungssystem 18 wirkverbunden ist, mittels dessen die Kupplung 6 in einen eingekuppelten und/oder ausgekuppelten Betriebszustand überführbar ist und das insbesondere hydraulische Betätigungssystem 18 einen koaxial zur Kupplungsrotationsachse 32 in Axialrichtung versetzbaren Kolben 26 mit einer kreisförmigen Stirnfläche 31 aufweist, welcher mechanisch so mit der Kupplung 6 verbunden ist, dass ein axialer Versatz des Kolbens 26 eine Aktuierung der Kupplung 6 entgegen der Federkraft der Tellerfeder 58 bewirkt und die Kupplung 6 auf dem mitdrehend ausgeführten Betätigungssystem 18 abgestützt ist. Dies wird nachstehend näher erläutert.

Der Kolben 26 ist mit den Anbindungselementen 61 so wirkverbunden, dass ein axialer Versatz des Kolbens 26 einen axialen Versatz der Anpressplatte 8 entgegen der Federkraft der axial gegenüber der Gegenplatte 10 fixierten Tellerfeder 58 bewirkt. Der Kolben 26 kann in der gezeigten Ausgestaltung der Erfindung besonders kurz ausgeführt werden, da die Kolbendichtung 38 und der Führungsring 39 radial übereinander angeordnet sind und auf zwei unterschiedliche zylindrische Flächen mit unterschiedlichem Durchmesser des Kolbens 26 wirken.

In der Figur 2 ist der Verbrennungsmotor 3 mit einem nicht näher bezeichneten Kurbelwellenflansch angedeutet. Das Drehmoment des Verbrennungsmotors 3 wird auf einen Drehschwingungsdämpfer 16, welcher in der gezeigten Ausführungsform als Zwei-Massen-Schwungrad (ZMS) ausgeführt ist, übertragen. Über die Sekundärseite 15 des Drehschwingungsdämpfers 16, der über eine als Steckverzahnung 44 ausgebildeten Verbindungsstelle mit der Kupplungsscheibe 7 der Kupplung 6 verbunden ist, wird das Drehmoment auf die Kupplung 6 übertragen und von dort bei geschlossener Kupplung 6 zum Elektromotor 2, weitergeleitet.

Die Kupplung 6 stützt sich auf ihrem Betätigungssystem 18 ab, das fest mit der Zwischenwelle 20 verbunden ist. Die Zwischenwelle 20 ist fest mit dem Rotorträger 21 verbunden oder wie in diesem abgebildeten Ausführungsbeispiel gezeigt, einteilig mit dem Rotorträger 21 ausgeführt. Die Zwischenwelle 20 ist somit drehfest mit dem Rotor 63 des Elektromotors 2 verbunden und wird durch die Schrägkugellager 22 gemeinsam mit dem Elektromotor 2 auf der gehäusefesten Zwischenwand 23 abgestützt.

Somit werden auch die Kupplung 6 und ihr Betätigungssystem 18, die beide fest mit der Zwischenwelle 20 verbunden sind, von dem Schrägkugellagern 22 drehbar gelagert, axial und radial abgestützt und zentriert. Das Drehmoment des Elektromotors 2 wird, unabhängig davon ob es ausschließlich vom Elektromotor 2 oder von dem mit ihm durch die geschlossene Kupplung 6 verbundenen Verbrennungsmotor 3 erzeugt wurde, durch ein nicht dargestelltes Hauptdrehmomentübertragungselement 69 auf das Getriebe 19 übertragen. Das Hauptdrehmomentübertragungselement 69 ist mit seiner Antriebsseite mit dem Rotor des Elektromotors 2 verbunden und mit seiner Abtriebseite mit einem das Drehmoment des Antriebsmoduls aufnehmenden Aggregat z.B. dem Getriebe 19.

In dem Ausführungsbeispiel der Figur 2 ist das Hauptdrehmomentübertragungselement 69 durch zwei Scheibennaben einer nicht dargestellten Doppelkupplung angedeutet. Daher sind passend zu einer Doppelkupplung auch zwei Getriebeeingangswellen 42 abgebildet.

Das Drehmoment kann über den hier beschriebenen Pfad immer auch in beide Richtungen übertragen werden. So kann beispielsweise auch der Elektromotor 2 Drehmoment auf den Verbrennungsmotor 3 übertragen (beispielsweise zum Starten des Verbrennungsmotors) und es ist auch möglich Drehmoment vom Getriebe 19 zu einem oder zu beiden Antriebsmotoren 2,3 zu übertragen (beispielsweise zum Rekuperieren oder um das Motorschleppmoment als Motorbremsfunktion zu nutzen).

Das hydraulische Betätigungssystem 18 ist am vom Getriebe 19 wegweisenden Ende der Zwischenwelle 20 befestigt. Dazu ist ein hülsenartiges Bauteil 24 des Betätigungssystems 18 auf die Zwischenwelle 20 aufgesteckt, und durch eine formschlüssige Verbindungskontur 57 (Steckverzahnung) drehfest mit der Zwischenwelle 20 verbunden. Zusätzlich ist das hülsenförmige Bauteil 24 axial auf der Zwischenwelle 20 fixiert. Dazu besitzt die als Hohlwelle ausgeführte Zwischenwelle 20 an ihrem von Getriebe 19 wegwesenden Ende am Innendurchmesser einen Gewindeabschnitt, in den eine Schraube 25 eingeschraubt wird, deren Schraubenkopf 37 am Ende der Zwischenwelle 20 vorbei radial nach außen ragt und sich axial an dem hülsenförmigen Bauteil 24 des Betätigungssystems 18 abstützt. Durch diese Schraube 25 wird das hülsenförmige Bauteil 24 axial gegen einen Rücksprung der Zwischenwelle 20 gedrückt und so axial auf der Zwischenwelle 20 fixiert. Das Betätigungssystem 18 wird nicht nur genutzt, um die Kupplung 6 zu öffnen und zu schließen, sondern auch als Befestigungselement, an dem alle axial feststehenden Bauteile der Kupplung 6 direkt oder indirekt befestigt werden. Die Gegenplatte 10 der Kupplung 6 ist direkt mit dem hülsenförmigen Bauteil 24 des Betätigungssystems 18 verbunden und stützt die anderen Kupplungsbauteile ab. Bei geschlossener Kupplung 6 wird die Kupplungsscheibe 7 von der Anpressplatte 8 gegen die Gegenplatte 10 gedrückt.

Das als hülsenförmiges Bauteil 24 beschriebene Element, ist im Sinne dieses Patents ein Bauteil oder eine Baugruppe, die alle oder ein Teil der folgende Funktionen erfüllen kann:
- Element, das einen axial feststehenden Zylinder für das Betätigungssystem 18 bildet,
- Element, das den Kolben axial führt und/oder spezielle Führungselemente (z.B. einen Führungsring) abstützt,
- Element, das die Kupplungsanordnung mit der Zwischenwelle 20 und/oder dem Elektromotor 2 verbindet und insbesondere auch Axialkräfte, Radialkräfte, und/oder Drehmoment überträgt,
- Element, das einen Formschluss mit der Zwischenwelle 20 ausbildet.

Die zum Einklemmen der Kupplungsscheibe 7 benötigte Kraft, stammt aus einer Tellerfeder 58, die sich an der Gegenplatte 10 abstützt und über mehrere Anbindungselemente 61 mit der Anpressplatte 10 verbunden ist. Dies ist gut anhand der Detailansicht von Figur 3 zu erkennen. Die Tellerfeder 58 stützt sich bei dem Ausführungsbeispiel radial innen über einen Auflagering 64 (z.B. eine Drahtring) an der Gegenplatte 10 ab. Radial außen stützt sich die Tellerfeder 58 an einem Druckring 65 ab, der durch als Stufenbolzen ausgeformte Anbindungselemente 61 und den Kupplungsdeckel 29 mit der Anpressplatte 8 verbunden ist. Es ist natürlich auch denkbar, dass sich die Tellerfeder 58 radial innen gegen den Druckring 65 abstützt. Das Betätigungssystem 18 ist über ein ringförmiges Zugelement 50 mit dem Kupplungsdeckel 29 verbunden.

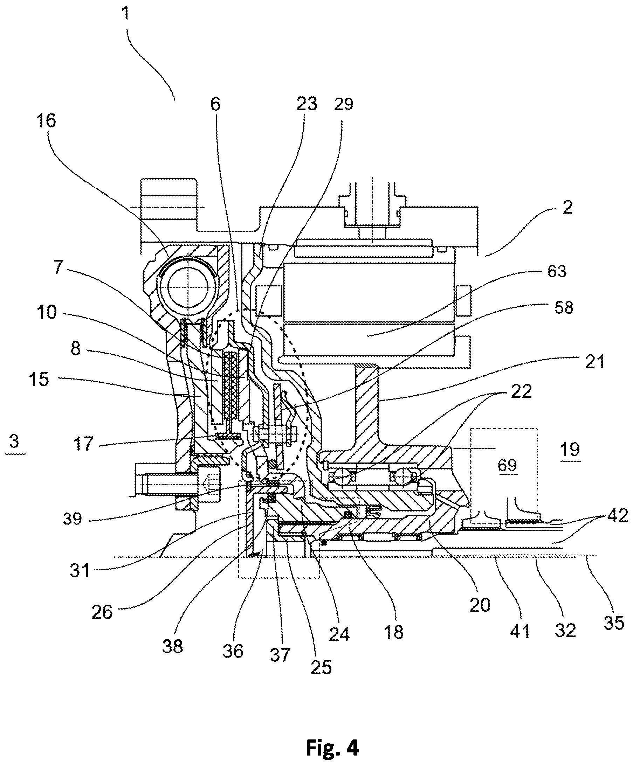

Im geschlossenen Zustand, welcher in der Figur 4 gezeigt ist, in dem die Kupplungsscheibe 7 reibschlüssig zwischen der Anpressplatte 8 und der Gegenplatte 10 eingeklemmt ist und Drehmoment zwischen der Kupplung 6 und der Kupplungsscheibe 7 übertragen werden kann, übt das Betätigungssystem 18 keine oder nur eine sehr geringe Kraft auf die Kupplung 6 aus. Um die Kupplung 6 zu öffnen, wird das Zugelement 50 vom Betätigungssystem 18, insbesondere hydraulisch, kraftbeaufschlagt. Sobald diese Kraft, die in den Kupplungsdeckel 29 eingeleitet wird und der ebenfalls über die Stufenbolzen 61 in den Kupplungsdeckel 29 eingeleiteten Tellerfederkraft entgegengereichtet ist, groß genug ist, wird die Anpressplatte 8 von der Kupplungsscheibe 7 wegbewegt und die Kupplung 6 geöffnet. Zum erneuten Schließen der Kupplung 6 wir die Kraft des Betätigungssystems 18 wieder reduziert, so dass die Tellerfederkraft wieder überwiegt und die axial beweglichen Teile der Kupplung 6 wieder verschieben kann, bis die Kupplungsscheibe 7 erneut eingeklemmt ist.

Die axialbeweglichen Teile der Kupplung 6 (im gezeigten Ausführungsbeispiel die Anpressplatte 8, Kupplungsdeckel 29, Zugelement 50, Stufenbolzen 61 und Druckring 65) sind über elastische Elemente z.B. Blattfedern mit der axial feststehenden Gegenplatte 10 verbunden. Diese elastischen Elemente sorgen für eine begrenzte axiale Verlagerbarkeit der axial beweglichen Teile sowie deren radialen und rotatorischen Abstützung und deren Zentrierung. Die elastischen Bauteile können über mehrere auf dem Umfang verteilten Blattfedern realisiert werden, die jeweils auf ihrer einen Seite mit der Anpressplatte 8 oder dem Kupplungsdeckel 29 verbunden sind und mit ihrer andern Seite mit der Gegenplatte 10 verbunden sind.

Figur 5 zeigt die Tellerfeder 58 und einige der sie umgebenden Bauteile in einer perspektivischen Darstellung. Die kreisrunden Federringinnendurchmesser und - außendurchmesser 59,60 der Tellerfeder 58 ermöglichen es den Federwerkstoff gut auszunutzen, da sich durch die runde Form eine gleichmäßige Spannungsverteilung auf dem Umfang ergibt. Die Tellerfeder 58 besitzt eine Mehrzahl von Fenstern 62, welche äquidistant verteilt über den Umfang, in radialer Richtung in etwa mittig zwischen Federringinnendurchmesser und - außendurchmesser 59,60 angeordnet sind. Das Zugelement 50 sowie der Kupplungsdeckel 29 sind auf der der Kupplungsscheibe 7 zugewandten Seite der Tellerfeder 58 an den als Stufenbolzen ausgebildeten Anbindungselementen 61 angeordnet und gegen eine Stufe des Stufenbolzens mittels Vernietung axial fixiert.

An der dem Zugelement 50 entgegengesetzten Seite der Tellerfeder 58 ist der Druckring 65 auf dem Anbindungselement 61 angeordnet und ebenfalls gegen eine Stufe des Stufenbolzens mittels Vernietung fixiert.

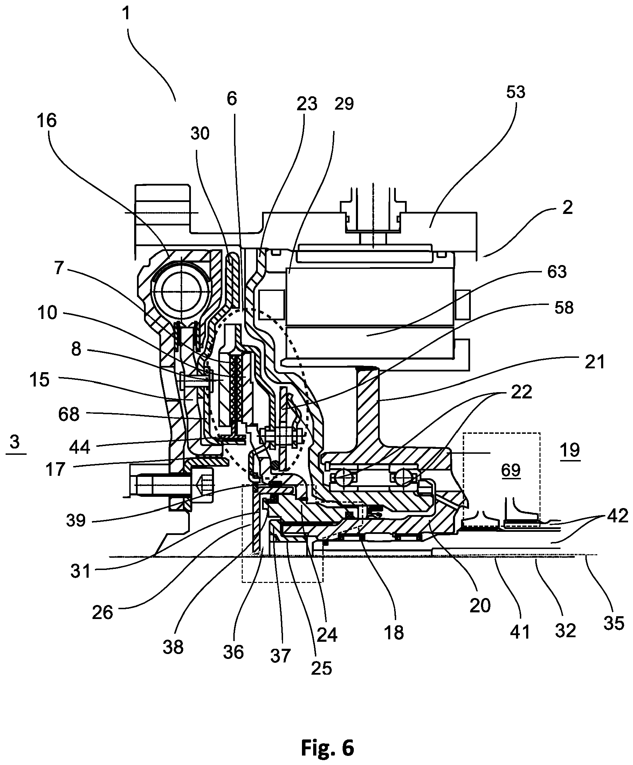

Figur 6 zeigt eine weitere Ausführungsform der Kupplungsanordnung 1, bei der die Schnittstelle zwischen der Kupplungsscheibe 7 und dem Drehschwingungsdämpfer 16 mehrteilig gestaltet ist. Die Kupplungsscheibe 7 ist hierbei axial versetzbar an einer Sekundärseite 15 eines Drehschwingungsdämpfers 16 abgestützt, wie es auch aus dem Ausführungsbeispiel der Figur 2 bekannt ist. Die als Steckverzahnung ausgebildete Verbindungsstelle 44, in die die Kupplungsscheibe 7 eingreift, ist jedoch nicht mehr - wie im Ausführungsbeispiel der Figur 2 - direkt an der Sekundärseite 15 des Drehschwingungsdämpfers 16 angeordnet, sondern wird über ein separates mit der Sekundärseite 15 verbundenes Bauteil 68 realisiert.

Durch den radialen Abstand zwischen der Verbindungsstelle 44 zur Sekundärseite 15 und der Verzahnung kann das Bauteil 68 mit einer definierten axialen Weichheit ausgestaltet werden. Zum anderen ist ein Massering 30 an der Sekundärseite 15 des Drehschwingungsdämpfers 16 angebracht, der sich axial zwischen dem Bogenfederkanal des als Zweimassenschwungrad (ZMS) ausgebildeten Drehschwingungsdämpfers 16 und der Zwischenwand 23 des Hybridmodulgehäuses 53 nach außen erstreckt und die Massenträgheit der Baueinheit zwischen den ZMS-Bogenfedern und der Kupplungsscheibe 7 erhöht.

Beide Maßnahmen, die zusätzliche axiale Weichheit und die höhere Massenträgheit, führen dazu, dass die Kupplungsscheibe 7 im geöffneten Zustand ruhiger zwischen den benachbarten Reibflächen von Anpressplatte 8 und Gegenplatte 10 läuft. Dadurch wird das Schleppmoment der offenen Kupplung reduziert und die Effizienz der Kupplungsanordnung 1 gesteigert.

Der Kolben 26 ist im Ausführungsbeispiel der Figur 2 mit dem Zugelement 50 der Kupplung 6 über eine Bajonettverbindung 51 verbunden. Dadurch kann der ganze Kolben 26 für die Montage oder Demontage vom Zugelement 50 getrennt werden und vom hülsenförmigen Bauteil 24 abgezogen werden. Wurde der Kolben 26 entfernt, lässt sich die zentrale Befestigungsschraube 25 im inneren der Zwischenwelle 20 problemlos erreichen. Wenn die Schraube 25 festgezogen wurde, kann man den Kolben 16 wieder auf das hülsenförmige Bauteil 24 stecken und über die Bajonettverbindung 51 die Kraftübertragung des Kolbens 26 auf das Zugelement 50 ermöglichen.

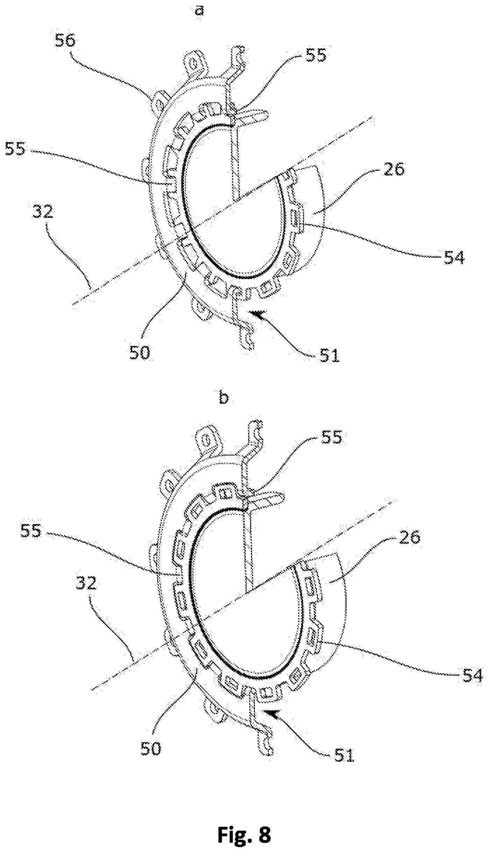

In der Figur 8 ist eine freigestellte perspektivische Ansicht der Bajonettverbindung 51 gezeigt, anhand derer die Funktionsweise näher erläutert wird. Die in der Figur 8 gezeigte Bajonettverbindung 51 zwischen Kolben 26 und Zugelement 50 ermöglicht - wie oben beschrieben - eine einfache Montage und Demontage des Kolbens 26. Dies kann erfolgen, wenn die Kupplung 6 und das restliche Betätigungssystem 18 bereits mit dem Hybridmodul verbunden und auf der Zwischenwelle 20 verschraubt ist.

Die obere Abbildung a der Figur 5 zeigt die Bajonettverbindung 51 in einer eingehängten Betriebsposition und die untere Abbildung b der Figur 5 in der Montageposition.

Der Kolben 26 wird in einem ersten Montageschritt, der in der unteren Abbildung b der Figur 5 gezeigt ist, auf das hülsenförmige Bauteil 24 aufgesetzt und in seine axial hintere Endstellung geschoben. Dabei wird die Bajonettkontur des Kolbens 26 so ausgerichtet, dass sie durch die Bajonettkontur des Zugelementes 50 hindurchgeschoben werden kann. Bei dem in Figur 5 b gezeigten Ausführungsbeispiel heißt dies, dass die Ösen 54 des Kolbens 26 in Umfangsrichtung so ausgereichtet werden, dass sie sich vor den Lücken zwischen den Haken 55 des Zugelementes 50 befinden. Der Kolben 26 kann dann in seine hintere Endstellung geschoben werden, was gut aus der Zusammenschau von Figur 2 mit Figur 8 ersichtlich wird.

Das Zugelement 50 wird nachfolgend nach vorne gezogen. In der Figur 8 entspricht dies einer Bewegung des Zugelements 50 entlang der Kupplungsrotationsachse 32 nach links. Die in der Figur 2 gezeigte aufgedrückte Kupplung 6 wird dabei geöffnet. Um das Zugelement 50 für die Montage nach vorne zu ziehen, kann es beispielsweise zwischen den äußeren Befestigungslaschen 56 am Außendurchmesser des ringförmigen Abschnittes des Zugelements 50 gepackt werden.

Wenn das Zugelement 50 so weit nach vorne gezogen wurde, bis sich die Spitzen der Haken 55 axial vor dem Bereich der am Kolben 26 befestigten Ösen 54 befindet, wird der Kolben 26 in Umfangsrichtung verdreht, bis sich die Ösen 54 in axialer Richtung direkt vor den Hacken 55 des Zugelementes 50 befinden. Anschließend kann das Zugelement 50 auf dem Kolben 26 abgesetzt werden. Die Haken 55 des Zugelements 50 greifen dabei in die Ösen 54 am Kolben 26 ein und ermöglichen so die axiale Kraftübertragung zwischen Kolben 26 und Zugelement 50 und verhindern gleichzeitig eine ungewollte Verdrehung des Kolbens 26 und somit ein ungewolltes Aushängen der Bajonettkontur. Dieser Betriebszustand der Bajonettverbindung 51 ist in der Abbildung a der Figur 8 widergegeben.

Für die Demontage kann das Zugelement 50 wieder nach vorne gezogen werden, so dass der Kolben 26 verdreht und vom hülsenförmigen Bauteil 24 abgezogen werden kann.

Die Richtungsangaben axial, radial, tangential und Umfangsrichtung beziehen sich auf die Rotationsachse, um die sich die Motoren und die Kupplung drehen.

Die Erfindung ist nicht auf die in den Figuren dargestellten Ausführungsformen beschränkt. Die vorstehende Beschreibung ist daher nicht als beschränkend, sondern als erläuternd anzusehen. Die nachfolgenden Patentansprüche sind so zu verstehen, dass ein genanntes Merkmal in zumindest einer Ausführungsform der Erfindung vorhanden ist. Dies schließt die Anwesenheit weiterer Merkmale nicht aus. Sofern die Patentansprüche und die vorstehende Beschreibung 'erste' und 'zweite' Merkmal definieren, so dient diese Bezeichnung der Unterscheidung zweier gleichartiger Merkmale, ohne eine Rangfolge festzulegen.

### Bezugszeichenliste

1 Kupplungsanordnung
2 Elektromotor
3 Verbrennungsmotor
4 Antriebsstrang
5 Kraftfahrzeugs
6 Kupplung
7 Kupplungsscheibe
8 Anpressplatte
9 Anpressplatte
10 Gegenplatte
11 Scheibenträger
12 Axial-Federelement
13 Anschlagbügel
14 Wälzlager
15 Sekundärseite
16 Drehschwingungsdämpfers
17 Verbindungsstelle
18 Betätigungssystem
19 Getriebe
20 Zwischenwelle
21 Rotorträger
22 Schrägkugellager
23 Zwischenwand
24 hülsenförmiges Bauteil
25 Schraube
26 Kolben
27 Drucktopf
28 Anschlagskontur
29 Kupplungsdeckel
30 Massering
31 Stirnfläche
32 Kupplungsrotationsachse
33 Kolbendeckel
34 Kolbenring
35 Hydraulikfluid
36 Druckraum
37 Schraubenkopf
38 Kolbendichtung
39 Führungsring
40 Gleitringdichtung
41 Längsbohrung
42 Getriebeeingangswelle
43 Dichtung
44 Steckverzahnung
45 Druckstück
46 Blattfedern
47 Nietverbindung
48 Hirthverzahnung
49 O-Ring
50 Zugelement
51 Bajonettverbindung
52 Dichtung
53 Hybridmodulgehäuse
54 Ösen
55 Haken
56 Laschen
57 Verzahnung
58 Tellerfeder
59 Federringdurchmesser
60 Federringdurchmesser
61 Anbindungselemente
62 Fenster
63 Rotor
64 Auflagering
65 Druckring
66 Abschnitt
67 Abschnitt
68 Bauteil
69 Hauptdrehmomentübertragungselement
70 ringförmiger Luftspalt

## Patentansprüche

1. Kupplungsanordnung (1), umfassend eine Kupplung (6) mit wenigstens einer Kupplungsscheibe (7), welche radial und axial zwischen einer Anpressplatte (8) und einer der Anpressplatte (9) axial gegenüberliegenden Gegenplatte (10) angeordnet ist, so dass durch einen relativen axialen Versatz von Kupplungsscheibe (7) und/oder Anpressplatte (9) und/oder Gegenplatte (10) ein Reibschluss zwischen diesen Bauteilen herstellbar und so ein Drehmoment zwischen der Kupplungsscheibe (7) und der Anpressplatte (9) sowie Gegenplatte (10) übertragbar ist, wobei die Kupplung (6) wenigstens eine Tellerfeder (58) aufweist, welche gegenüber der Anpressplatte (8) und der Gegenplatte (10) verspannt ist, so dass ein federkraftbewirkter Versatz der Anpressplatte (8) zur Gegenplatte (10) bewirkbar ist, wobei die Kupplung (6) ferner einen ringförmigen Kupplungsdeckel (29) mit einem radial äußeren Kupplungsdeckeldurchmesser besitzt und die Kupplungsscheibe (7) innerhalb des äußeren Kupplungsdeckeldurchmessers angeordnet ist, wobei die ringförmige Tellerfeder (58) an einer äußeren der Kupplungsscheibe (7) abgewandten Stirnseite des Kupplungsdeckels (29) und axial zu diesem beabstandet angeordnet ist, und die ringförmige Tellerfeder (58) einen radial äußeren Federringdurchmesser (59) und einen radial inneren Federringdurchmesser (60) aufweist, wobei der radial äußere Federringdurchmesser (59) kleiner ist als der radial äußere Durchmesser der Kupplungsscheibe (7) und der radial innere Federringdurchmesser (60) der Tellerfeder (58) kleiner ist als der radial innere Durchmesser der Kupplungsscheibe (7), **dadurch gekennzeichnet, dass** sich die Tellerfeder (58) im Bereich ihres äußeren oder inneren Federringdurchmessers (59) gegen einen an den Anbindungselementen (61) axial fixierten Druckring (65) abstützt.

2. Kupplungsanordnung (1), nach Anspruch 1
**dadurch gekennzeichnet, dass**
die Tellerfeder (58) eine Mehrzahl von Fenstern (62) aufweist, durch die Anbindungselemente (61) hindurchgreifen, die sich in Axialrichtung aus dem und/oder durch den Kupplungsdeckel (29) erstrecken.

3. Kupplungsanordnung (1), nach einem der vorherigen Ansprüche,
**dadurch gekennzeichnet, dass**
die Anbindungselemente (61) Stufenbolzen umfassen.

4. Kupplungsanordnung (1), nach einem der vorherigen Ansprüche,
**dadurch gekennzeichnet, dass**
die Tellerfeder (58) an ihrem inneren Federringdurchmesser (60) axial fixiert ist und an ihrem äußeren Federringdurchmesser (59) axial versetzbar ausgeführt ist oder dass die Tellerfeder (58) an ihrem inneren Federringdurchmesser (60) axial versetzbar ausgeführt ist und an ihrem äußeren Federringdurchmesser (59) axial fixiert ausgeführt ist.

5. Kupplungsanordnung (1), nach einem der vorherigen Ansprüche,
**dadurch gekennzeichnet, dass**
die Kupplung (6) mit einem Betätigungssystem (18) wirkverbunden ist, mittels dessen die Kupplung (6) in einen eingekuppelten und/oder ausgekuppelten Betriebszustand überführbar ist und das Betätigungssystem (18) einen koaxial zur Kupplungsrotationsachse (32) in Axialrichtung versetzbaren Kolben (26) mit einer kreisförmigen Stirnfläche (31) aufweist, welcher mechanisch so mit der Kupplung (6) verbunden ist, dass ein axialer Versatz des Kolbens (26) eine Aktuierung der Kupplung (6) entgegen der Federkraft der Tellerfeder (58) bewirkt und die Kupplung (6) auf dem mitdrehend ausgeführten Betätigungssystem (18) abgestützt ist.

6. Kupplungsanordnung (1), nach einem der vorherigen Ansprüche,
**dadurch gekennzeichnet, dass**
der Kolben (26) mit den Anbindungselementen (61) so wirkverbunden ist, dass ein axialer Versatz des Kolbens (26) einen axialen Versatz der Anpressplatte (8) entgegen der Federkraft der Tellerfeder (58) bewirkt.

7. Kupplungsanordnung (1), nach einem der vorherigen Ansprüche,
**dadurch gekennzeichnet, dass**
die Kupplungsanordnung (1) einen Elektromotor (2) mit einem Rotor (63) umfasst, wobei in Radialrichtung zwischen der Kupplungsrotationsachse (32) und dem Rotor (63) ein Ringraum definiert ist, in welchem die Tellerfeder (58) aufgenommen ist.

8. Kupplungsanordnung (1), nach einem der vorherigen Ansprüche,
**dadurch gekennzeichnet, dass**
die Kupplungsscheibe (7) axial versetzbar an einer Sekundärseite (15) eines Drehschwingungsdämpfers (16) abgestützt ist.

9. Kupplungsanordnung (1), nach einem der vorherigen Ansprüche,
**dadurch gekennzeichnet, dass**
in Radialrichtung zwischen dem äußeren Federringdurchmesser (59) der Tellerfeder (58) und dem Rotor (63) des Elektromotors (2) ein ringförmiger Luftspalt (70) definiert ist, welcher nicht von Bauteilen der Kupplung (6) durchgriffen wird.

## Claims

1. A clutch assembly (1) comprising a clutch (6) with at least one clutch disc (7), which is arranged radially and axially between a pressure plate (8) and a counter plate (10) lying axially opposite the pressure plate (9), such that a relative axial offset of the clutch disc (7) and/or pressure plate (9) and/or counter plate (10) can produce a frictional connection between these components and thus a torque can be transmitted between the clutch disc (7) and the pressure plate (9) and counter plate (10), wherein the clutch (6) has at least one disc spring (58), which is biased relative to the pressure plate (8) and the counter plate (10) such that the pressure plate (8) can be offset relative to the counter plate (10) under the effect of a spring force, wherein the clutch (6) additionally has an annular clutch cover (29) with a radially outer clutch cover diameter and the clutch disc (7) is arranged within the outer clutch cover diameter, wherein the annular disc spring (58) is arranged on an outer clutch cover (29) end face facing away from the clutch disc (7) at an axial distance therefrom, and the annular disc spring (58) has a radially outer spring ring diameter (59) and a radially inner spring ring diameter (60), wherein the radially outer spring ring diameter (59) is smaller than the radially outer diameter of the clutch disc (7), and the radially inner spring ring diameter (60) of the disc spring (58) is smaller than the radially inner diameter of the clutch disc (7), **characterised in that** the disc spring (58) is supported in the region of its outer or inner spring ring diameter (59) against a thrust ring (65) axially fixed to the connecting elements (61).

2. The clutch assembly (1) according to claim 1,
**characterised in that**
the disc spring (58) has a plurality of windows (62) through which connecting elements (61) reach, said connecting elements extending in the axial direction from and/or through the clutch cover (29).

3. The clutch assembly (1) according to one of the preceding claims,
**characterised in that**
the connecting elements (61) comprise step bolts.

4. The clutch assembly (1) according to one of the preceding claims,
**characterised in that**
the disc spring (58) is axially fixed on its inner spring ring diameter (60) and is designed to be axially displaceable on its outer spring ring diameter (59), or **in that** the disc spring (58) is designed to be axially displaceable on its inner spring ring diameter (60) and is designed to be axially fixed on its outer spring ring diameter (59).

5. The clutch assembly (1) according to one of the preceding claims,
**characterised in that**
the clutch (6) is operatively connected to an actuation system (18), by means of which the clutch (6) can be converted into an engaged and/or disengaged operating state, and the actuation system (18) has a piston (26) with a circular end face (31) that can be coaxially offset to the clutch rotation axis (32) in the axial direction and is mechanically connected to the clutch (6) in such a way that an axial displacement of the piston (26) causes the clutch (6) to be actuated counter to the spring force of the disc spring (58) and the clutch (6) is supported on the actuation system (18), which is designed to rotate therewith.

6. The clutch assembly (1) according to one of the preceding claims,
**characterised in that**
the piston (26) is operatively connected to the connecting elements (61) in such a way that an axial offset of the piston (26) causes an axial offset of the pressure plate (8) against the spring force of the disc spring (58).

7. The clutch assembly (1) according to one of the preceding claims,
**characterised in that**
the clutch assembly (1) comprises an electric motor (2) with a rotor (63), wherein an annular space is defined in the radial direction between the clutch rotation axis (32) and the rotor (63), in which the disc spring (58) is accommodated.

8. The clutch assembly (1) according to one of the preceding claims,
**characterised in that**
the clutch disc (7) is supported in an axially displaceable manner on a secondary side (15) of a torsional vibration damper (16).

9. The clutch assembly (1) according to one of the preceding claims,
**characterised in that**
an annular air gap (70) is defined in the radial direction between the outer spring ring diameter (59) of the disc spring (58) and the rotor (63) of the electric motor (2), which is not penetrated by components of the clutch (6).

## Revendications

1. Ensemble embrayage (1), comprenant un embrayage (6) comportant au moins un disque d'embrayage (7) qui est agencé radialement et axialement entre un plateau de pression (8) et un contre-plateau (10) axialement opposé au plateau de pression (9), de telle sorte que par un décalage relatif axial du disque d'embrayage (7) et/ou du plateau de pression (9) et/ou du contre-plateau (10), une liaison par friction puisse être établie entre ces composants et un couple peut ainsi être transmis entre le disque d'embrayage (7), le plateau de pression (9) et le contre-plateau (10), dans lequel l'embrayage (6) présente au moins un ressort à lames (58) qui est tendu par rapport au plateau de pression (8) et au contre-plateau (10), de sorte qu'un décalage induit par force de ressort du plateau de pression (8) par rapport au contre-plateau (10) peut être effectué, dans lequel l'embrayage (6) possède en outre un couvercle d'embrayage annulaire (29) ayant un diamètre radialement extérieur de couvercle d'embrayage et le disque d'embrayage (7) est agencé à l'intérieur du diamètre extérieur de couvercle d'embrayage, dans lequel le ressort à lames annulaire (58) est agencé sur une face frontale extérieure du couvercle d'embrayage (29) opposée au disque d'embrayage (7) et à une distance axiale de celui-ci, et le ressort à lames annulaire (58) présente un diamètre d'anneau de ressort radialement extérieur (59) et un diamètre d'anneau de ressort radialement intérieur (60), dans lequel le diamètre d'anneau de ressort radialement extérieur (59) est inférieur au diamètre radialement extérieur du disque d'embrayage (7) et le diamètre d'anneau de ressort radialement intérieur (60) du ressort à lames (58) est inférieur au diamètre radialement intérieur du disque d'embrayage (7), **caractérisé en ce que** le ressort à lames (58) s'appuie dans la zone de son diamètre d'anneau de ressort extérieur ou intérieur (59) contre un anneau de pression (65) fixé axialement sur les éléments de liaison (61).

2. Ensemble embrayage (1), selon la revendication 1
**caractérisé en ce que**
le ressort à disque (58) présente une pluralité de fenêtres (62) à travers lesquelles passent les éléments de liaison (61) qui s'étendent dans la direction axiale hors du et/ou à travers le couvercle d'embrayage (29).

3. Ensemble embrayage (1) selon l'une quelconque des revendications précédentes, **caractérisé en ce que**
les éléments de liaison (61) comprennent des boulons étagés.

4. Ensemble embrayage (1) selon l'une quelconque des revendications précédentes, **caractérisé en ce que**
le ressort à lames (58) est fixé axialement sur son diamètre intérieur d'anneau de ressort (60) et est conçu pour pouvoir être décalé axialement sur son diamètre extérieur d'anneau de ressort (59) ou **en ce que** le ressort à lames (58) est conçu pour pouvoir être décalé axialement sur son diamètre intérieur d'anneau de ressort (60) et est conçu fixé axialement sur son diamètre extérieur d'anneau de ressort (59).

5. Ensemble embrayage (1) selon l'une quelconque des revendications précédentes, **caractérisé en ce que**
l'embrayage (6) est relié fonctionnellement à un système d'actionnement (18), au moyen duquel l'embrayage (6) peut passer à un état de fonctionnement embrayé et/ou débrayé et le système d'actionnement (18) présente un piston (26) qui peut être décalé dans la direction axiale coaxialement à l'axe de rotation de l'embrayage (32) comportant une face frontale circulaire (31) qui est reliée mécaniquement à l'embrayage (6) de telle sorte qu'un décalage axial du piston (26) entraîne un actionnement de l'embrayage (6) contre la force de ressort du ressort à lames (58) et l'embrayage (6) est supporté sur le système d'actionnement (18) conjointement rotatif.

6. Ensemble embrayage (1) selon l'une quelconque des revendications précédentes, **caractérisé en ce que**
le piston (26) est relié fonctionnellement aux éléments de liaison (61), de telle sorte qu'un décalage axial du piston (26) provoque un décalage axial du plateau de pression (8) à l'encontre de la force de ressort du ressort à disque (58).

7. Ensemble embrayage (1) selon l'une quelconque des revendications précédentes, **caractérisé en ce que**
l'ensemble embrayage (1) comprend un moteur électrique (2) comportant un rotor (63), dans lequel un espace annulaire est défini dans la direction radiale entre l'axe de rotation de l'embrayage (32) et le rotor (63), dans lequel le ressort à lames (58) est reçu.

8. Ensemble embrayage (1) selon l'une quelconque des revendications précédentes, **caractérisé en ce que**
le disque d'embrayage (7) est supporté pour pouvoir être décalé axialement sur un côté secondaire (15) d'un amortisseur de vibrations de torsion (16).

9. Ensemble embrayage (1) selon l'une quelconque des revendications précédentes, **caractérisé en ce que**
un entrefer annulaire (70) est défini dans la direction radiale entre le diamètre extérieur de l'anneau de ressort (59) du ressort à lames (58) et le rotor (63) du moteur électrique (2), qui n'est pas pénétré par des éléments de l'embrayage (6).
